# EUROPEAN PATENT APPLICATION

(11) **EP 4 603 881 A1**
(43) Date of publication of application: **20.08.2025**
(21) Application number: 24744622.2
(22) Date of filing: 15.01.2024
(51) Int. Cl.: G02B 5/02, F21S 2/00, F21V 3/00, F21V 3/10, G02F 1/1335, G02F 1/13357, F21Y 115/10

(54) **LIGHT-DIFFUSING SHEET, BACKLIGHT UNIT, LIQUID CRYSTAL DISPLAY DEVICE, AND INFORMATION APPARATUS**

(30) Priority: 19.01.2023 JP 2023006634; 12.01.2024 JP 2024003081
(71) Applicant: KEIWA Incorporated, Tokyo 103-0025 (JP)
(72) Inventor: MATSUDA Shuichi, Tokyo 103-0025 (JP); MATSUNO Yuki, Tokyo 103-0025 (JP); FUKUDA Tadayoshi, Tokyo 103-0025 (JP); HARADA Kenichi, Tokyo 103-0025 (JP)
(74) Representative: Becker Kurig & Partner Patentanwälte mbB
(86) International application number: PCT/JP2024/000822
(87) International publication number: WO 2024/154699

(57) **Abstract**

A light-diffusing sheet 43B has an uneven shape for diffusing light on a first surface S1, and has a coating layer 103 constituted by a resin 106 containing a plurality of particles 107 on a second surface S2. On the second surface S2 provided with the coating layer 103, an arithmetic mean roughness Ra is 1.5 µm or more and 2.5 µm or less, a maximum height Rz is 10 µm or more and 14 µm or less, and an element average length RSm is 140 µm or more and 300 µm or less.

## Description

### Technical Field

The present disclosure relates to a light-diffusing sheet, a backlight unit, a liquid crystal display device, and an information apparatus.

### Background Art

Liquid crystal display devices (liquid crystal displays) are widely used as display devices in various information apparatuses such as smartphones and tablet terminals. As backlights of liquid crystal displays, direct-type systems in which a light source is deployed on the rear surface of a liquid crystal panel are predominantly used.

In a direct-type backlight, a light-diffusing sheet is used in order to diffuse light from a light source such as an LED (Light Emitting Diode) and thereby achieve uniformity of brightness and chromaticity over the entire screen (see Patent Literature 1). In thin displays such as laptops and tablet terminals, the light is often diffused by providing inverted pyramid-shaped recesses on one surface of the light-diffusing sheet.

### Citation List

### Patent Literature

Patent Literature 1: Japanese Patent Application Publication No. 2011-76115

### Summary of Invention

### Technical Problem

A light-diffusing sheet is required to exhibit a light diffusion performance (a brightness uniformity improvement capacity) with which the entire screen of the liquid crystal display appears to emit light uniformly even when the LEDs are deployed in a distributed manner immediately beneath the screen, and at the same time to exhibit a performance (a brightness improvement capacity) with which the brightness of the screen is maintained even while the light is diffused in order to improve energy efficiency of the liquid crystal display. However, in a light-diffusing sheet, the brightness uniformity improvement capacity and the brightness improvement capacity are usually in a trade-off relationship.

An object of the present disclosure is to provide a light-diffusing sheet capable of improving both the brightness uniformity and the brightness.

### Solution to Problem

To achieve this object, a light-diffusing sheet according to a first aspect of the present disclosure is a light-diffusing sheet having an uneven shape for diffusing light on a first surface, wherein a coating layer constituted by a resin containing a plurality of particles is provided on a second surface on the opposite side to the first surface. The second surface provided with the coating layer has an arithmetic mean roughness Ra of 1.5 µm or more and 2.5 µm or less. The second surface provided with the coating layer has a maximum height Rz 10 µm or more and 14 µm or less. The second surface provided with the coating layer has an element average length RSm of 140 µm or more and 300 µm or less.

With the light-diffusing sheet according to the first aspect of the present disclosure, light can be diffused by the uneven shape on the first surface, and as a result, the brightness uniformity can be improved. Meanwhile, the surface shape of the second surface provided with the coating layer is a shape in which a large number of particles project uniformly over the entire coating layer. Therefore, when the second surface is the light emission surface, light can be emitted in a direction perpendicular to the second surface by the projecting parts of the particles, and as a result, the brightness can be improved. Thus, it is possible to provide a light-diffusing sheet capable of improving both the brightness uniformity and the brightness.

Note that in the present disclosure, the "light-diffusing sheet" is assumed to include a plate-shaped "light-diffusing plate" and a film-shaped "light-diffusing film".

In the light-diffusing sheet according to the first aspect of the present disclosure, when the arithmetic mean roughness Ra is 1.8 µm or more and 2.5 µm or less, the maximum height Rz is 11 µm or more and 14 µm or less, and the element average length RSm is 200 µm or more and 300 µm or less, the brightness can be further improved.

To achieve the above object, a light-diffusing sheet according to a second aspect of the present disclosure is a light-diffusing sheet having an uneven shape for diffusing light on a first surface, wherein a coating layer constituted by a resin containing a plurality of particles is provided on a second surface on the opposite side to the first surface. The mass ratio of the plurality of particles to the resin on the coating layer is 80% or more and 150% or less, and the mass per unit area of the coating layer is 2 g/m² or more and 7 g/m² or less.

With the light-diffusing sheet according to the second aspect of the present disclosure, light can be diffused by the uneven shape on the first surface, and as a result, the brightness uniformity can be improved. Meanwhile, by providing the coating layer, in which a resin containing a large number of particles is applied thinly, on the second surface, the large number of particles can be caused to project uniformly over the entire coating layer. Therefore, when the second surface is the light emission surface, light can be emitted in a direction perpendicular to the second surface by the projecting parts of the particles, and as a result, the brightness can be improved. Thus, it is possible to provide a light-diffusing sheet capable of improving both the brightness uniformity and the brightness.

In the light-diffusing sheet according to the second aspect of the present disclosure, when the mass ratio is set at 100% or more and 150% or less (preferably 120% or more and 130% or less) and the mass per unit area is set at 2 g/m² or more and 6 g/m² or less (preferably 2 g/m² or more and 4 g/m² or less), the brightness can be further improved.

In the light-diffusing sheet according to the first or second aspect of the present disclosure, the plurality of particles may have a hollow structure. Thus, a refractive index difference between the resin for fixing the particles inside the coating layer and the hollow part (air, for example) of each of the particles increases, thereby promoting light diffusion, and as a result, the brightness uniformity can be further improved.

In the light-diffusing sheet according to the first or second aspect of the present disclosure, the average particle size of the plurality of particles may be 0.1 µm or more and 30 µm or less. Thus, an increase in the thickness of the coating layer can be suppressed while securing a brightness enhancement effect by means of the projecting parts of the particles.

In the light-diffusing sheet according to the first or second aspect of the present disclosure, the uneven shape may be formed from a plurality of inverted substantially square pyramid-shaped recesses arranged in a two-dimensional matrix pattern. Thus, light diffusion is promoted by the inverted substantially square pyramid-shaped recesses, and as a result, the brightness uniformity can be further improved.

In the light-diffusing sheet according to the first or second aspect of the present disclosure, the second surface may be a matte surface or a flat surface. Thus, the coating layer can be formed easily.

A backlight unit according to the present disclosure is built into a liquid crystal display device for guiding light emitted from a plurality of light sources toward a display screen, and includes the light-diffusing sheet according to the first or second aspect of the present disclosure, described above, which is provided between the display screen and the plurality of light sources, the light-diffusing sheet being deployed such that the first surfaces faces the plurality of light sources.

With the backlight unit according to the present disclosure, since the light-diffusing sheet that is capable of improving both the brightness uniformity and the brightness is used, it is possible to display a bright screen with excellent brightness uniformity.

In the backlight unit according to the present disclosure, one or a plurality of brightness enhancing sheets may be provided between the display screen and the light-diffusing sheet, and one or a plurality of other light-diffusing sheets having an uneven shape for diffusing light on at least one surface may be provided between the light-diffusing sheet and the plurality of light sources. Thus, the brightness can be further improved by the brightness enhancing sheet, and the brightness uniformity can be further improved by other light-diffusing sheet.

A liquid crystal display device according to the present disclosure includes the backlight unit according to the present disclosure, described above, and a liquid crystal display panel.

Since the liquid crystal display device according to the present disclosure includes the backlight unit according to the present disclosure, described above, it is possible to display a bright screen with excellent brightness uniformity.

An information apparatus according to the present disclosure includes the liquid crystal display device according to the present disclosure, described above.

Since the information apparatus according to the present disclosure includes the liquid crystal display device according to the present disclosure, described above, it is possible to display a bright screen with excellent brightness uniformity.

### Advantageous Effects of Invention

According to the present disclosure, it is possible to provide a light-diffusing sheet capable of improving both the brightness uniformity and the brightness, as well as a backlight unit, a liquid crystal display device, and an information apparatus using the light-diffusing sheet.

### Brief Description of Drawings

[FIG. 1] is a cross-sectional view of a liquid crystal display device according to an embodiment.
[FIG. 2] is a cross-sectional view of a backlight unit according to the embodiment.
[FIG. 3] is a cross-sectional view showing an example configuration of a (non-coated) light-diffusing sheet according to the embodiment.
[FIG. 4] is a cross-sectional view showing an example configuration of a (coated) light-diffusing sheet according to the embodiment.
[FIG. 5] is a perspective view showing the light-diffusing sheet according to the embodiment from a surface on which recesses are provided.
[FIG. 6] is a view showing a planar configuration and a cross-sectional configuration of the recess provided in the light-diffusing sheet according to the embodiment.
[FIG. 7] is a view showing an example of a relationship between an arrangement direction of light sources and an arrangement direction of the recesses of the light-diffusing sheet in the backlight unit according to the embodiment, wherein (a) shows the arrangement of the light sources and (b) shows the arrangement of the recesses.
[FIG. 8] is a display image of a coated surface of a light-diffusing sheet according to an example.
[FIG. 9] is a cross-sectional image of a coating layer and a region in the vicinity thereof in a light-diffusing sheet according to an example.

### Description of Embodiments

### (Embodiment)

A light-diffusing sheet, a backlight unit, a liquid crystal display device, and an information apparatus according to an embodiment will be described below with reference to the drawings. It should be noted that the scope of the present disclosure is not limited to the embodiment described below and any modifications can be made without departing from the scope of the technical concept of the present disclosure.

### <Liquid crystal display device>

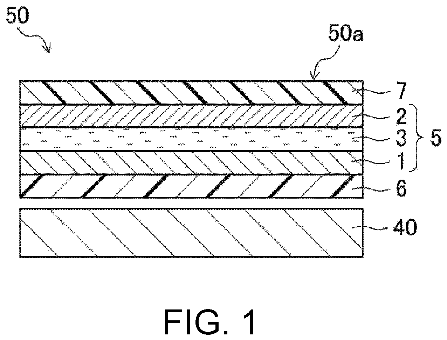

FIG. 1 shows an example of a cross-sectional configuration of a liquid crystal display device according to an embodiment.

As shown in FIG. 1, a liquid crystal display device 50 includes a liquid crystal display panel 5, a first polarizing plate 6 adhered to a lower surface of the liquid crystal display panel 5, a second polarizing plate 7 adhered to an upper surface of the liquid crystal display panel 5, and a backlight unit 40 provided on the back surface side of the liquid crystal display panel 5 via the first polarizing plate 6. The liquid crystal display panel 5 includes a TFT substrate 1 and a CF substrate 2, which are provided so as to face each other, a liquid crystal layer 3 provided between the TFT substrate 1 and the CF substrate 2, and a sealing material (not shown) provided in a frame shape between the TFT substrate 1 and the CF substrate 2 in order to seal the liquid crystal layer 3.

The shape of a display screen 50a of the liquid crystal display device 50 as seen from the front (above in FIG. 1) may be rectangular or square, or may be another desired shape, such as a rectangular shape with rounded corners, an elliptical, circular, or trapezoidal shape, or the shape of an instrument panel for an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 according to this embodiment is used as a display device built into any of various information apparatuses (for example, an in-vehicle device for car navigation or the like, a personal computer, a mobile phone, a portable information terminal, a portable game machine, a copy machine, a ticket vending machine, an automated teller machine, or the like).

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes. For example, the CF substrate 2 includes a black matrix provided in a grid pattern on a glass substrate, a color filter including a red layer, a green layer, and a blue layer respectively provided between the grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarizing axis in one direction and a pair of protective layers provided so as to sandwich the polarizer layer.

### <Backlight unit>

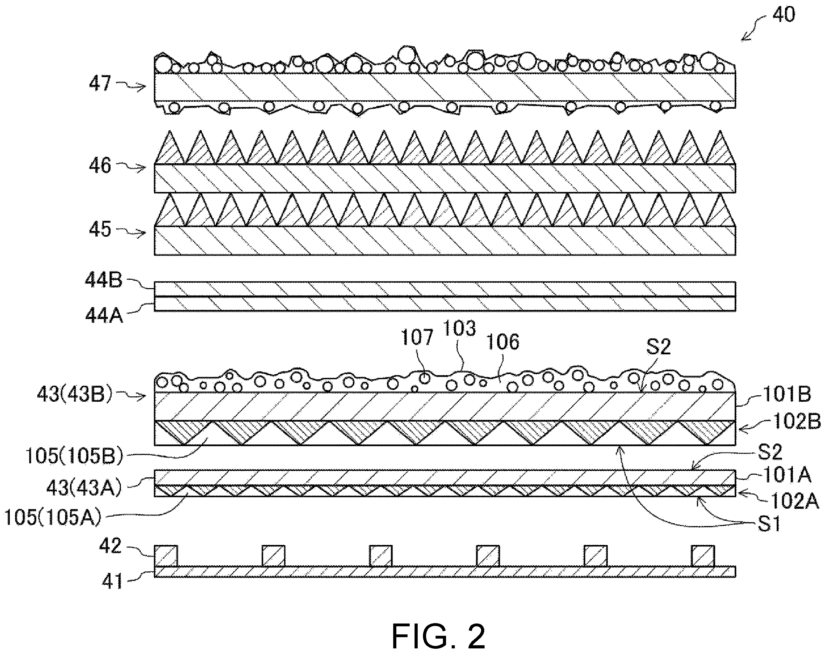

FIG. 2 shows an example of a cross-sectional configuration of the backlight unit according to the embodiment.

As shown in FIG. 2, the backlight unit 40 mainly includes a plurality of light sources 42 and a light-diffusing sheet 43 provided on the upper side of the light sources 42. The plurality of light sources 42 may be deployed twodimensionally on a reflective sheet 41. The light sources 42 may be, for example, white light sources or blue light sources. A plurality of light-diffusing sheets 43 may be deployed. In this example, a first light-diffusing sheet 43A and a second light-diffusing sheet 43B are stacked and deployed in that order as the light-diffusing sheet 43 from the side closer to the light sources 42. A plurality of inverted substantially square pyramid-shaped recesses 105 are provided on a light entrance surface of each light-diffusing sheet 43. A light emission surface of the first light-diffusing sheet 43A is a matte surface or a flat surface. A coating layer 103 constituted by a resin 106 containing a plurality of particles 107 is provided on the light emission surface of the second light-diffusing sheet 43B. The light-diffusing sheet 43 will be described in detail later.

In this example, since blue light sources are used as the light sources 42, a wavelength selection sheet 44A and a color conversion sheet 44B are deployed in that order on the upper side of the light-diffusing sheet 43. The wavelength selection sheet 44A selectively transmits light having the emission wavelength of the light sources 42, and reflects light of other wavelengths. The color conversion sheet 44B converts the color of the light emitted by the light sources 42. The wavelength selection sheet 44A and the color conversion sheet 44B may be deployed between the light-diffusing sheet 43 and the light sources 42, or may be deployed between the light-diffusing sheets 43.

On the upper side of the light-diffusing sheet 43, a first prism sheet 45 and a second prism sheet 46 may be deployed in that order as brightness enhancing sheets for enhancing the brightness. On the upper side of the second prism sheet 46, an upper light-diffusing sheet 47 may be deployed in order to suppress brightness unevenness caused by the prism sheets 45 and 46.

### [Reflective sheet]

The reflective sheet 41 is formed from a white polyethylene terephthalate resin film, a silver vapordeposited film, or the like, for example.

### [Light sources]

The type of the light sources 42 is not particularly limited, and for example, LED elements, laser elements, or the like may be used, while from the perspectives of cost, productivity, and so on, LED elements may be used. The light sources 42 may have a rectangular shape when seen in plan view, and in this case, the length of one side may be 10 µm or more (preferably 50 µm or more) and 10 mm or less (preferably 5 mm or less). When LED elements are used as the light sources 42, the plurality of LED elements (LED chips) may be deployed on the reflective sheet 41 at fixed intervals in a two-dimensional matrix pattern. A lens may be mounted on the LED elements constituting the light sources 42 in order to adjust the output angle characteristic of the LED elements. The number of deployed light sources 42 is not particularly limited, but when the plurality of light sources 42 are deployed in a distributed manner, the light sources 42 are preferably deployed regularly on the reflective sheet 41. Regularly deployed means deployed with a fixed regularity, and for example corresponds to a case in which the light sources 42 are deployed at equal intervals. When the light sources 42 are deployed at equal intervals, a center-to-center distance between two adjacent light sources 42 may be 0.5 mm or more (preferably 2 mm or more) and 20 mm or less.

When the light sources 42 are blue light sources, for example, blue LED elements that emit light of x < 0.24 and y < 0.18 in terms of the CIE1931 chromaticity coordinates may be used. When the light sources 42 are white light sources, the white light source may be constituted by an LED element with a peak wavelength in the blue region, an LED element with a peak wavelength in the green region, and an LED element with a peak wavelength in the red region, and may emit, for example, light of 0.24 < x < 0.42 and 0.18 < y < 0.48 in terms of the CIE1931 chromaticity coordinates.

### [Light-diffusing sheet]

The light-diffusing sheet 43 diffuses light rays entering from the light sources 42. In the backlight unit 40 shown in FIG. 2, a case in which two light-diffusing sheets 43 are used is shown, but the second light-diffusing sheet 43B may be used alone as the light-diffusing sheet 43. Alternatively, three or more light-diffusing sheets 43 including the second light-diffusing sheet 43B as the top layer may be stacked and used. In this case, two or more first light-diffusing sheets 43A may be stacked and deployed on the lower side of the second light-diffusing sheet 43B.

The matrix resin constituting the light-diffusing sheet 43 is not particularly limited as long as the matrix resin is constituted by a material that transmits light, and for example, polycarbonate, acrylic, polystyrene, MS (methyl methacrylate-styrene copolymer) resin, polyethylene terephthalate, polyethylene naphthalate, cellulose acetate, polyimide, and so on may be used. The thickness of the light-diffusing sheet 43 is also not particularly limited, and may be, for example, 50 µm or more and 3 mm or less. When the thickness of the light-diffusing sheet 43 exceeds 3 mm, it becomes difficult to achieve a thin liquid crystal display, whereas when the thickness of the light-diffusing sheet 43 falls below 50 µm, it becomes difficult to obtain a sufficient light diffusion effect. When a plurality of light-diffusing sheets 43 are used, the total thickness may be around several hundred µm to several mm. The light-diffusing sheet 43 may be in the form of a film or a plate. The configuration and manufacturing method of the light-diffusing sheet 43 will be described in further detail below.

### [Wavelength selection sheet and color conversion sheet]

The wavelength selection sheet 44A selectively transmits light having the emission wavelength of the light sources 42 (for example, blue light) and reflects light of other wavelengths. The color conversion sheet 44B converts the light (for example, blue light) from the light sources 42 into light having a wavelength of a desired color (for example, green or red) as a peak wavelength. For example, the color conversion sheet 44B converts blue light having a wavelength of 450 nm into green light having a wavelength of 540 nm and red light having a wavelength of 650 nm. In this case, when light sources 42 that emit blue light having a wavelength of 450 nm are used, the blue light is partially converted into green light and red light by the color conversion sheet 44B, whereby the light transmitted through the color conversion sheet 44B becomes white light. A QD (quantum dot) sheet, a fluorescent sheet, or the like, for example, may be used as the color conversion sheet 44B. Since the wavelength selection sheet 44A is deployed on the lower side of the color conversion sheet 44B, light having a wavelength that has been changed by the color conversion sheet 44B can only advance upward from the color conversion sheet 44B.

The wavelength selection sheet 44A and the color conversion sheet 44B can be deployed in any position between the light sources 42 and the first prism sheet 45. When white light sources are used as the light sources 42, the wavelength selection sheet 44A and the color conversion sheet 44B may be omitted.

### [Prism sheets]

The first prism sheet 45 and the second prism sheet 46 refract light rays entering from the light-diffusing sheet 43 in a normal direction. For example, a plurality of groove lines with an isosceles triangle-shaped cross-section are provided adjacent to each other on the respective light emission surfaces of the prism sheets 45 and 46, and prisms are formed from triangular column parts sandwiched between adjacent pairs of groove lines. The apex angle of the prism is around 90°, for example. The groove lines formed in the first prism sheet 45 and the groove lines formed in the second prism sheet 46 may be deployed so as to be orthogonal to each other. Thus, light rays entering from the light-diffusing sheet 43 can be refracted in the normal direction by the first prism sheet 45, and light rays emitted from the first prism sheet 45 can be refracted by the second prism sheet 45 so as to advance substantially perpendicularly to the light entrance surface of the upper light-diffusing sheet 47. The prism sheets 45 and 46 may be stacked as separate bodies or may be formed integrally. The total thickness of the prism sheets 45 and 46 may be around 100-400 µm, for example. A PET (polyethylene terephthalate) film in which prism shapes are formed using a UV-curable acrylic resin, for example, may be used as the prism sheets 45 and 46.

In this example, the two prism sheets 45 and 46 are used as brightness enhancing sheets, but one prism sheet may be used instead. Alternatively, another type of brightness enhancing sheet that can increase the brightness of the light emitted from the light sources 42 may be used. In this case, the brightness enhancing sheet may increase the brightness by consolidating light rays using double reflection and the refractive index of the light as the light passes through the sheet. Alternatively, the brightness enhancing sheet may increase the brightness by recycling an S-wave that does not pass through the first polarizing plate 6 of the liquid crystal display device 50 and converting the recycled S-wave into a P-wave that passes through the first polarizing plate 6. Note that if a sufficient brightness enhancement effect cannot be obtained by the prism sheets 45 and 46, another brightness enhancing sheet may be further deployed on the upper side of the second prism sheet 46.

### [Upper diffusing sheet]

The upper light-diffusing sheet 47 slightly diffuses light rays entering from the second prism sheet 46 side so as to suppress brightness unevenness caused by the shape of the prism portions of the prism sheets 45 and 46 and so on. The upper light-diffusing sheet 47 may be directly stacked on the front surface of the second prism sheet 46. The thickness of the upper light-diffusing sheet 47 is not particularly limited, but may be, for example, 50 µm or more and 3 mm or less. When the thickness of the upper light-diffusing sheet 47 exceeds 3 mm, it becomes difficult to achieve a thin liquid crystal display, whereas when the thickness of the upper light-diffusing sheet 47 falls below 50 µm, it becomes difficult to obtain a sufficient light diffusion effect. The upper light-diffusing sheet 47 may be in the form of a film or a plate. The upper light-diffusing sheet 47 may be configured to include a base material layer and a light-diffusing layer that is stacked on both surfaces of the base material layer and contains a resin matrix and resin beads. Alternatively, the upper light-diffusing sheet 47 may be, for example, a PET film having an uneven shape formed on at least one surface thereof using a UV-curable acrylic resin.

### <Configuration of light-diffusing sheet>

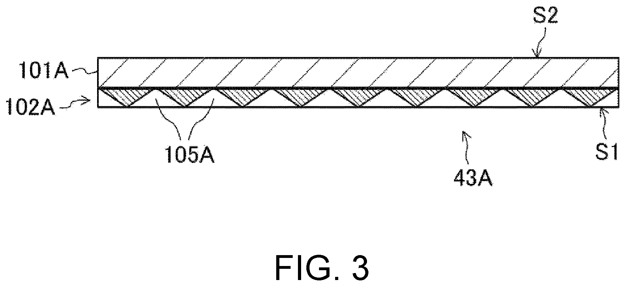

As shown in FIG. 3, the first light-diffusing sheet 43A mainly includes a base material layer 101A and a light-diffusing layer 102A provided on the base material layer 101A. The first light-diffusing sheet 43A has a first surface (the front surface of the light-diffusing layer 102A) S1 that serves as the light entrance surface, and a second surface (the front surface of the base material layer 101A) S2 that serves as the light emission surface. The light-diffusing layer 102A is provided with a plurality of recesses 105A having an uneven shape, for example an inverted substantially polygonal pyramid shape (in this example, an inverted substantially square pyramid shape (an inverted pyramid shape)), for diffusing light. The second surface S2 of the first light-diffusing sheet 43A may be, for example, a matte surface or a flat surface. The first light-diffusing sheet 43A may be deployed so that the first surface S1 serves as the light emission surface and the second surface S2 serves as the light entrance surface.

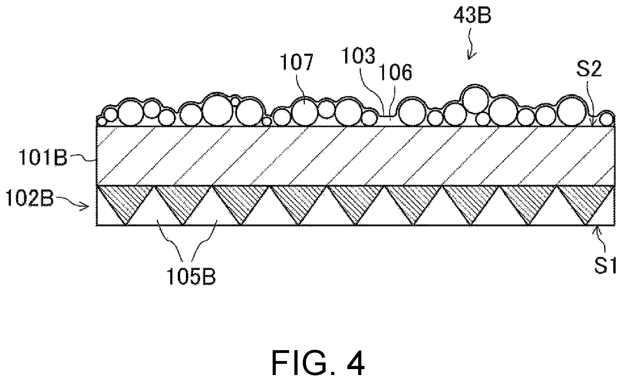

As shown in FIG. 4, the second light-diffusing sheet 43B mainly includes a base material layer 101B and a light-diffusing layer 102B provided on the base material layer 101B. The second light-diffusing sheet 43B has a first surface (the front surface of the light-diffusing layer 102B) S1 that serves as the light entrance surface, and a second surface (the front surface of the base material layer 101B) S2 that serves as the light emission surface. The light-diffusing layer 102B is provided with a plurality of recesses 105B having an uneven shape, for example an inverted substantially polygonal pyramid shape (in this example, an inverted substantially square pyramid shape (an inverted pyramid shape)), for diffusing light. The coating layer 103 is provided on the second surface S2 of the second light-diffusing sheet 43B. The coating layer 103 is formed by dispersing the plurality of particles 107 through the light-transmitting resin 106. The second surface S2, which forms the application surface of the coating layer 103, may be a matte surface or a flat surface.

### [Base material layer]

The base material layers 101A and 101B (hereinafter referred to collectively as the base material layer 101) are required to transmit light rays, and are therefore formed using a transparent (for example, colorless and transparent) synthetic resin as a main component. The main component of the base material layer 101 is not particularly limited, and for example, polycarbonate, polyethylene terephthalate, polyethylene naphthalate, acrylic resin, polystyrene, polyolefin, cellulose acetate, weather-resistant vinyl chloride or the like may be used. Note that the term "main component" refers to the component having the highest content, for example, a component having a content of 50% by mass or more. The base material layer 101 may contain a diffusing agent or other additives, or may contain substantially no additives. The additives that can be included are not particularly limited, and may be inorganic particles of silica, titanium oxide, aluminum hydroxide, barium sulfate, or the like, for example, or organic particles of acrylic, acrylonitrile, silicone, polystyrene, polyamide, or the like, for example.

The lower limit of the average thickness of the base material layer 101 is preferably around 10 µm, more preferably around 35 µm, and even more preferably around 50 µm. The upper limit of the average thickness of the base material layer 101 is preferably around 500 µm, more preferably around 250 µm, and even more preferably around 180 µm. When the average thickness of the base material layer 101 is less than the lower limit, there is a risk of curling occurring when the diffusion layers 102A and 102B are formed. Conversely, when the average thickness of the base material layer 101 exceeds the upper limit, the brightness of the liquid crystal display device 50 may decrease, and it may become difficult to reduce the thickness of the liquid crystal display device 50. It should be noted that term "average thickness" refers to an average value of the thickness at any ten points.

As shown in FIG. 2, in this example, in order to increase the dimensions (pitch, depth, etc.) of the inverted pyramid-shaped recesses 105B in the second light-diffusing sheet 43B as compared to the dimensions of the inverted pyramid-shaped recesses 105A in the first light-diffusing sheet 43A, the thickness of the base material layer 101B of the second light-diffusing sheet 43B is set to be greater than the thickness of the base material layer 101A of the first light-diffusing sheet 43A. By increasing the size of the inverted pyramid-shaped recesses 105B, it is possible to promote brightness uniformity while suppressing reductions in brightness in the second light-diffusing sheet 43B.

### [Light-diffusing layer]

The light-diffusing layers 102A, 102B (hereinafter referred to collectively as the light-diffusing layer 102) are required to transmit light rays, and may therefore be formed using a transparent (for example, colorless transparent) synthetic resin as the main component. For example, the light-diffusing layer 102 may be molded integrally with the base material layer 101 during extrusion molding of a base material resin forming the base material layer 101, or may be molded separately using a UV-curable resin after molding the base material layer 101.

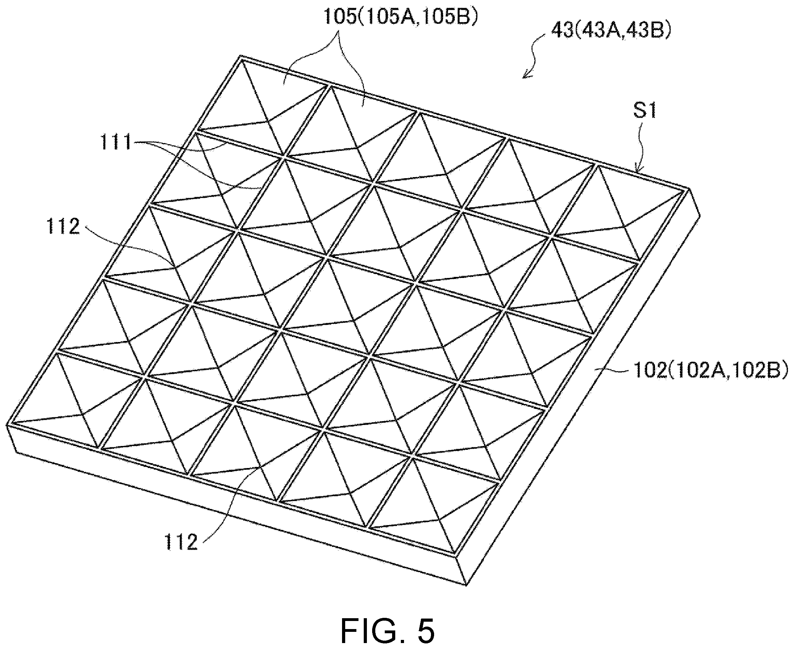

As shown in FIG. 5, for example, the pluralities of inverted substantially square pyramid-shaped (inverted pyramid-shaped) recesses 105A and 105B (hereinafter referred to collectively as the recesses 105) provided on the light-diffusing layer 102 (the first surface S1 of the light-diffusing sheet 43) may be arranged in a two-dimensional matrix pattern. In other words, the plurality of recesses 105 may be arranged along two mutually orthogonal directions. Adjacent recesses 105 are partitioned by ridge lines 111. The ridge lines 111 extend along the two directions in which the recesses 105 are arranged. The arrangement pitch of the recesses 105 may be, for example, around 50 µm or more and around 500 µm or less. A center (the apex of the inverted pyramid) 112 of the recess 105 is the deepest part of the recess 105. The center (the deepest part) 112 of the recess 105 may reach the base material layer 101. In other words, the depth of the recess 105 may be set to be equal to the thickness of the light-diffusing layer 102. Note that although FIG. 5 illustrates a state in which the recesses 105 are deployed in a 5×5 matrix pattern for the sake of simplicity, the number of actually arranged recesses 105 is significantly larger.

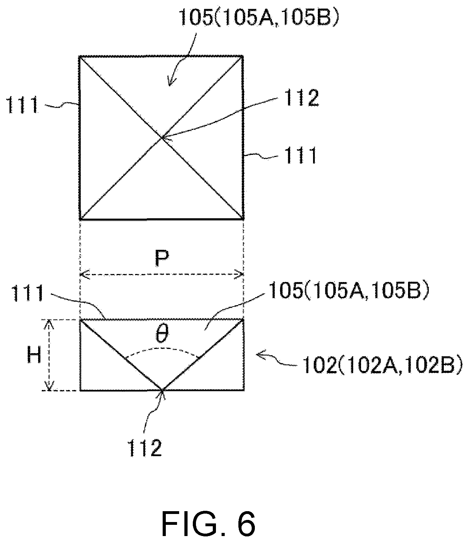

The apex angle θ of the recess 105 may be set at around 70° or more and around 90° or less, for example. As shown in FIG. 6, the apex angle θ of the recess 105 is an angle formed by inclined surfaces of the recess 105 in a cross-section (the lower diagram in FIG. 6) that appears when the recess 105 is cut so as to perpendicularly cross the pair of ridge lines 111 that pass through the apex 112 of the inverted pyramid and face each other across the apex 112 in a plane (a vertical cross-section) that is perpendicular to a placement surface (a horizontal plane) of the light-diffusing sheet 43. Note that the upper diagram of FIG. 6 shows the planar configuration of the recess 105. Furthermore, in FIG. 6, "H" denotes the depth of the recess 105 (the height of the pyramid shape), and "P" denotes the horizontal width of the recess 105 (in other words, the arrangement pitch of the recesses 105). The depth H of the recess 105 is determined by the arrangement pitch P of the recesses 105 and the apex angle θ of the recess 105.

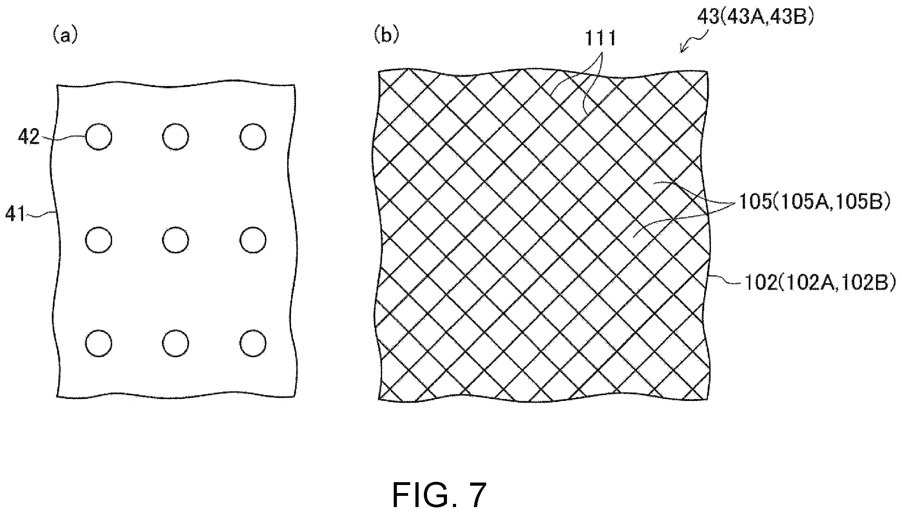

When the plurality of light sources 42 are arranged in a square shape, as shown in (a) of FIG. 7, the arrangement direction of the recesses 105 may be inclined by around 45°, for example, as shown in (b) of FIG. 7, using the arrangement direction of the light sources 42 as a reference. When the recesses 105 are formed in an inverted pyramid shape, by setting the arrangement direction of the light sources 42 and the arrangement direction of the recesses 105 to intersect, the brightness uniformity can be improved more than when the two arrangement directions are aligned.

Although in this example, the inverted pyramid-shaped (inverted substantially square pyramid-shaped) recesses 105 are arranged in a two-dimensional matrix pattern so as to form an uneven shape, the recesses 105 may be arranged randomly to the extent that the actions and effects of the present invention are not lost. When the recesses 105 are regularly arranged in a two-dimensional pattern, gaps may be provided between the recesses 105, but do not have to be provided. The recesses 105 may have an inverted substantially polygonal pyramid shape other than an inverted substantially square pyramid shape. For example, the "inverted polygonal pyramid" shape of the recess 105 may be an inverted triangular pyramid or an inverted hexagonal pyramid that can be deployed twodimensionally without gaps, similarly to an inverted square pyramid. When the "inverted polygonal pyramid" shape of the recess 105 is an inverted square pyramid, it is easy to improve the accuracy of a surface cutting operation of a metal mold (a metal roll) used in a manufacturing process such as extrusion molding or injection molding performed when providing the recesses 105.

Although the term "inverted substantially polygonal pyramid" is used in the present disclosure, in consideration of the fact that it is difficult to form geometrically strict inverted polygonal pyramid-shaped recesses with ordinary shape transfer techniques, it is assumed that the term "inverted substantially polygonal pyramid" includes shapes that can be regarded as a truly or substantially inverted polygonal pyramid. In addition, the term "substantially" means "can be approximated" such that, for example, an "inverted substantially square pyramid" refers to a shape that can approximate an inverted square pyramid. For example, likewise with regard to an "inverted polygonal truncated pyramid" having a flat top, as long as the actions and effects of the present invention are not lost, a shape having a small top area is also assumed to be included as an "inverted substantially polygonal pyramid". Furthermore, shapes that are deformed from an "inverted polygonal pyramid" within the range of inevitable shape variability due to machining accuracy in industrial production are also assumed to be included as an "inverted substantially polygonal pyramid".

### [Coating layer]

The coating layer 103 provided on the second surface (the light emission surface) of the second light-diffusing sheet 43B is formed by dispersing the plurality of particles 107 through the light-transmitting resin 106. The coating layer 103 is a different layer from the base material layer 101B. For example, the coating layer 103 may be formed by adding acrylic or styrene-based particles or the like to a mixed solution obtained by dissolving a thermosetting resin or a UV-curable resin in a solvent, applying the mixed solution to the front surface (the second surface S2) of the base material layer 101B, and curing the applied mixed solution.

The material of the resin 106 forming the coating layer 103 is not particularly limited as long as the material can transmit light, and may be a transparent resin such as acrylic urethane, for example.

As long as the particles 107 dispersed through the coating layer 103 function as a diffusing agent or a reflecting agent, the material, shape, and dimension thereof are not particularly limited. The material of the particles 107 may be, for example, acrylic, styrene, titanium, silica, nylon, urethane, or the like. The shape of the particles 107 may be a bead shape such as, for example, acrylic beads, or a fibrous shape such as, for example, cellulose nanofibers. The dimension of the particles 107 (diameter when the particles 107 are bead-shaped, and length when the particles 107 are fibrous) may be around several tens of nm to 100 µm, preferably around 0.1 µm to 30 µm. The particles 107 may be mono-dispersed or poly-dispersed particles. A coefficient of variation of the particles 107 may be around 20% to around 40%, where coefficient of variation (%) = (standard deviation of particle size distribution)/(particle size average)×100. The particles 107 may have a hollow structure. In this case, the particles 107 may be single-hollow or multi-hollow particles.

The mass ratio (also referred to hereinafter as the beads-binder ratio) of the particles 107 (for example, beads) to the resin 106 (a binder solid) in the coating layer 103 is 80% or more and 150% or less, preferably 100% or more and 150% or less, and more preferably 120% or more and 130% or less, while the mass per unit area (also referred to hereinafter as the application amount) of the coating layer 103 is 2 g/m² or more and 7 g/m² or less, preferably 2 g/m² or more and 6 g/m² or less, and more preferably 2 g/m² or more and 4 g/m² or less. By increasing the beads-binder ratio above normal so as to suppress the application amount in this manner, or in other words by applying the resin 106 containing the large number of particles 107 thinly so as to form the coating layer 103, the large number of particles 107 can be caused to project uniformly over the entire coating layer 103. Thus, on the second surface (the light emission surface) S2 of the second light-diffusing sheet 43B, light can be emitted in a direction perpendicular to the second surface S2 by the projecting parts of the particles 107, leading to an improvement in brightness. Note, however, that in order to fix the particles 107 with stability using the resin 106 in the coating layer 103, the beads-binder ratio preferably does not exceed 150%, and the application amount is preferably no lower than 2 g/m².

In addition, in order to obtain the above-described brightness enhancement effect by means of the projecting parts of the particles 107 in the coating layer 103, on the second surface S2 of the second light-diffusing sheet 43B, on which the coating layer 103 is provided, the arithmetic mean roughness Ra may be 1.5 µm or more and 2.5 µm or less, preferably 1.8 µm or more and 2.5 µm or less, the maximum height Rz may be 10 µm or more and 14 µm or less, preferably 11 µm or more and 14 µm or less, and the element average length RSm may be 140 µm or more and 300 µm or less, preferably 200 µm or more and 300 µm or less. Ra, Rz, and RSm are surface roughness parameters defined by JIS B 0601-2001.

It should be noted that the respective refractive indices of the resin 106 and the particles 107 in the coating layer 103 are not particularly limited, and for example, the refractive index of the coating layer 103 may be adjusted within a range of around 1.2 to 1.9 by adding low-refractive index particles (silica, hollow particles, or the like) or high-refractive index particles (a metal oxide or the like) to the resin 106, which has a refractive index of around 1.4 to 1.7.

### <Method of manufacturing light-diffusing sheet>

The method for manufacturing the light-diffusing sheet 43 is not particularly limited, and for example, it is possible to manufacture the light-diffusing sheet 43 using any of the following manufacturing methods.

In a first manufacturing method, first, a pellet-form base material resin (plastic resin) is formed into a resin film by an extrusion molding machine. Next, using a roll having convex pyramid shapes on the surface thereof as one of two metal rolls and using a roll having a flat shape or an inverted shape of a matte surface on the surface thereof as the other roll, the light-diffusing sheet 43 having inverted pyramid shapes (the recesses 105) on one surface and a flat surface or a matte surface on the other surface is manufactured by pressing the two rolls against the resin film. In this manufacturing method, the base material layer 101 and the light-diffusing layer 102 are formed integrally. Next, for the second light-diffusing sheet 43B, the coating layer 103 is formed on the other surface (the flat surface or matte surface).

In a second manufacturing method, first, the base material layer 101 having polyethylene terephthalate, for example, as the main component is prepared. While feeding the base material layer 101 between a pair of pressing rolls, a UV-curable resin (a resin composition for forming protrusions) is supplied to one surface of the base material layer 101 immediately before the pair of pressing rolls. A pressing roll having a plurality of substantially square pyramid-shaped protrusions on the outer peripheral surface thereof is used as the pressing roll on the side that comes into contact with the UV-curable resin. After pressing the pair of pressing rolls against the base material layer 101 to which the UV-curable resin has been supplied, the UV-curable resin is cured by UV irradiation, whereby a plurality of inverted pyramid shapes (the recesses 105), which are inverted shapes of the plurality of substantially square pyramid-shaped protrusions, are transferred, and as a result, the light-diffusing sheet 43 with the light-diffusing layer 102 provided on one surface of the base material layer 101 is manufactured. In this manufacturing method, the base material layer 101 and the light-diffusing layer 102 are formed separately. Next, for the second light-diffusing sheet 43B, the coating layer 103 is formed on the other surface of the base material layer 101B..

When forming the coating layer 103, for example, a mixed solution containing acrylic or styrene particles 107 (a solution obtained by dissolving the resin 106 in a solvent) may be applied and cured, or the resin 106 into which the particles 107 have been blended may be cured using a shape transfer method. The resin 106 may be, for example, a thermosetting resin, a UV-curable resin, or the like.

### <Features of embodiment>

The second light-diffusing sheet 43B of the embodiment described above has an uneven shape for diffusing light on the first surface S1, and has the coating layer 103 constituted by the resin 106 containing the plurality of particles 107 on the second surface S2. On the second surface S2 provided with the coating layer 103, the arithmetic mean roughness Ra is 1.5 µm or more and 2.5 µm or less, the maximum height Rz is 10 µm or more and 14 µm or less, and the element average length RSm is 140 µm or more and 300 µm or less. According to the second light-diffusing sheet 43B, since light can be diffused by the uneven shape of the first surface S1, the brightness uniformity can be improved. Meanwhile, the surface shape of the second surface S2 provided with the coating layer 103 is a shape in which a large number of particles uniformly project over the entire coating layer 103. Therefore, when the second surface S2 is the light emission surface, light can be emitted in a direction perpendicular to the second surface S2 by the projecting parts of the particles 107, and as a result, the brightness can be improved. Accordingly, it is possible to provide the second light-diffusing sheet 43B so as to be capable of improving both the brightness uniformity and the brightness. More specifically, when the arithmetic mean roughness Ra is 1.8 µm or more and 2.5 µm or less, the maximum height Rz is 11 µm or more and 14 µm or less, and the element average length RSm is 200 µm or more and 300 µm or less, the brightness can be further improved.

The mass ratio of the particles 107 to the resin 106 in the coating layer 103 may be 80% or more and 150% or less, and the mass per unit area of the coating layer 103 may be 2 g/m² or more and 7 g/m² or less. By providing the coating layer 106, which is formed by applying the resin 106 containing the large number of particles 107 thinly, on the second surface S2 in this manner, the large number of particles 107 can be caused to project uniformly over the entire coating layer 103. Hence, when the second surface S2 is the light emission surface, light can be emitted in a direction perpendicular to the second surface S2 by the projecting parts of the particles 107, and as a result, the brightness can be improved. Thus, it is possible to provide the second light-diffusing sheet 43B so as to be capable of improving both the brightness uniformity and the brightness. More specifically, when the mass ratio (the beads-binder ratio) is 100% or more and 150% or less (preferably 120% or more and 130% or less) and the mass per unit area (the application amount) is 2 g/m² or more and 6 g/m² or less (preferably 2 g/m² or more and 4 g/m² or less), the brightness can be further improved.

In the second light-diffusing sheet 43B of this embodiment, the plurality of particles 107 may have a hollow structure. Accordingly, the refractive index difference between the resin 106 for fixing the particles 107 inside the coating layer 103 and the hollow part (air, for example) of each of the particles 107 increases, thereby promoting light diffusion, and as a result, the brightness uniformity can be further improved.

In the second light-diffusing sheet 43B of this embodiment, the average particle size of the plurality of particles 107 may be 0.1 µm or more and 30 µm or less. Thus, an increase in the thickness of the coating layer 103 can be suppressed while securing a brightness enhancement effect by means of the projecting parts of the particles 107.

In the second light-diffusing sheet 43B of this embodiment, the uneven shape of the first surface S1 may be formed from the plurality of inverted substantially square pyramid-shaped recesses 105B arranged in a two-dimensional matrix pattern. Thus, since light diffusion is promoted by the inverted substantially square pyramid-shaped recesses 105B, the brightness uniformity can be further improved.

In the second light-diffusing sheet 43B of this embodiment, the second surface S2 may be a matte surface or a flat surface. Thus, the coating layer 103 can be formed easily.

The backlight unit 40 according to this embodiment is built into the liquid crystal display device 50 for guiding the light emitted from the plurality of light sources 42 toward the display screen 50a. The backlight unit 40 includes the second light-diffusing sheet 43B of this embodiment, which is provided between the display screen 50a and the light sources 42, and the second light-diffusing sheet 43B is deployed such that the first surface S1 serves as the light entrance surface, or in other words so that the first surface S1 faces the light sources 42. Thus, by using the second light-diffusing sheet 43B with which the brightness uniformity and the brightness can both be improved, it is possible to display a bright screen with excellent brightness uniformity.

In the backlight unit 40 of this embodiment, one or a plurality of brightness enhancing sheets (for example, the prism sheets 45 and 46) may be provided between the display screen 50a and the second light-diffusing sheet 43B, and one or a plurality of other light-diffusing sheets (for example, the first light-diffusing sheet 43A) having an uneven shape for diffusing light on at least one surface may be provided between the second light-diffusing sheet 43B and the light sources 42. Thus, the brightness can be further improved by the brightness enhancing sheet, and the brightness uniformity can be further improved by other light-diffusing sheet. In this case, the other light-diffusing sheet may also be provided with a similar coating layer to the coating layer 103. In other words, a similar light-diffusing sheet to the second light-diffusing sheet 43B may be used as the other light-diffusing sheet.

In the backlight unit 40 according to this embodiment, the plurality of light sources 42 may be deployed on the reflective sheet 41, which is provided in the opposite direction to the display screen 50a as viewed from the light-diffusing sheet 43. Thus, the light is further diffused by multiple reflection between the light-diffusing sheet 43 and the reflective sheet 41, whereby the brightness uniformity is further improved.

The liquid crystal display device 50 of this embodiment includes the backlight unit 40 of this embodiment and the liquid crystal display panel 5. By using the backlight unit 40 of this embodiment in this manner, it is possible to display a bright screen with excellent brightness uniformity. Similar effects can also be obtained in relation to an information apparatus (a personal computer, a cellular phone, or the like) in which the liquid crystal display device 50 of this embodiment is built.

Note that in this embodiment, a direct-type backlight unit in which the plurality of light sources 42 are deployed in a distributed manner on the back surface of the display screen 50a of the liquid crystal display device 50 is used as the backlight unit 40. Therefore, in order to reduce the size of the liquid crystal display device 50, it is necessary to reduce the distance between the light sources 42 and the light-diffusing sheet 43 (the first light-diffusing sheet 43A closest to the light sources 42 in the example shown in FIG. 2). However, when this distance is reduced, for example, a phenomenon (brightness unevenness) in which the brightness of the display screen 50a in parts located in areas between the light sources 42 deployed in a distributed manner becomes lower than the brightness in other parts is more likely to occur. Using the one or more light-diffusing sheets 43 including the second light-diffusing sheet 43B of this embodiment is useful for suppressing brightness unevenness. More specifically, when the distance between the light sources 42 and the light-diffusing sheet 43 (in a case where a plurality of light-diffusing sheets 43 are used, the light-diffusing sheet 43 nearest to the light sources 42) is set at 10 mm or less, preferably 5 mm or less, more preferably 2 mm or less, even more preferably 1 mm or less, and ultimately 0 mm in anticipation of future reductions in the thickness of small and medium-sized liquid crystal displays, it is believed that the usefulness of the second light-diffusing sheet 43B of this embodiment will become even more apparent. For example, even when a sufficient distance for achieving a thickness reduction cannot be secured between the light sources and the sheet, such as when the distance between the light sources 42 and the light-diffusing sheet 43 is 0 mm or more and 1 mm or less, by providing the second light-diffusing sheet 43B of this embodiment, deterioration of the brightness uniformity can be suppressed while securing a brightness enhancement effect.

### <Examples>

Results of evaluating the brightness and brightness uniformity in examples of the second light-diffusing sheet 43B will be described below.

The brightness and brightness uniformity were evaluated with the backlight configuration shown in FIG. 2.

Specifically, an LED array in which blue LED elements were arranged in a square array (with a pitch of around 2.7 mm × around 2.8 mm) was used as the plurality of light sources 42.

A polycarbonate sheet with a thickness of 190 µm was used as the first light-diffusing sheet 43A, the inverted pyramid-shaped recesses 105A having a depth of 107 µm and an apex angle of 80° were arranged on the first surface S1 in a two-dimensional matrix pattern at a pitch of 179 µm, and a matte surface with an arithmetic mean roughness Ra of 1.4 µm was used as the second surface S2. The first light-diffusing sheet 43A was deployed such that the first surface S1 faced the light sources 42, and such that the distance to the light sources 42 was essentially 0 mm.

A polycarbonate sheet having a thickness of 400 µm was used as the second light-diffusing sheet 43B, the inverted pyramid-shaped recesses 105B with a depth of 298 µm and an apex angle of 80° were arranged on the first surface S1 in a two-dimensional matrix pattern at a pitch of 497 µm, a matte surface with an arithmetic mean roughness Ra of 2.3 µm was used as the second surface S2, and the coating layer 103 was formed on the matte surface. More specifically, an acrylic thermosetting resin (refractive index 1.492) was used for the resin (the binder) 106, spherical acrylic particles (average particle size 4.64 µm, particle size standard deviation 1.86 µm, refractive index 1.49) were used for the particles (the beads) 107, a curing agent was added together with the particles 107 to a mixed solution obtained by dissolving the resin 106 in a solvent (a dilution thinner), and the mixed solution was applied to the second surface S2 of the second light-diffusing sheet 43B and cured to form the coating layer 103. The coating layer 103 was formed under 4 conditions in which the mass ratio (the beads-binder ratio) of the particles 107 to the resin 106 (the binder solid content) in the coating layer 103 was set at 75%, 100%, 125%, and 150%, and 4 conditions in which the mass per unit area (the application amount) of the coating layer 103 was set at 2 g/m², 4 g/m², 6 g/m², and 8 g/m², whereby a total of 16 samples of the second light-diffusing sheet 43B were prepared under 4 conditions x 4 conditions. As a comparative example, a sample in which the coating layer 103 was not provided on the second surface S2 of the second light-diffusing sheet 43B was also prepared.

A BLT (blue light transmission) sheet was used for the wavelength selection sheet 44A, a QD (Quantum Dot) sheet was used for the color conversion sheet 44B, and the BLT sheet and the QD sheet were formed as a composite sheet with a thickness of 212 µm.

As the first prism sheet 45, prisms with a height of 25 µm and an apex angle of 90° were formed on a PET film having a thickness of 154 µm by shape transfer using a UV-curable resin. As the second prism sheet 46, prisms with a height of 25 µm and an apex angle of 90° were formed on a PET film having a thickness of 151 µm by shape transfer using a UV-curable resin. The first prism sheet 45 and the second prism sheet 46 were deployed so that the respective prisms thereof were orthogonal to each other.

A sheet obtained by applying a bead coating to both surfaces of a PET film having a thickness of 135 µm was used as the upper light-diffusing sheet 47.

In the configurations described above, the brightness and the brightness uniformity were evaluated in the following manner in a state where a transparent glass plate was placed on the upper light-diffusing sheet 47 to prevent the sheets from floating up. First, using a two-dimensional color brightness meter UA-200, manufactured by Topcon Technohouse Corp., the brightness (cd/m²) upward in a vertical direction (a direction traveling from the LED array toward the glass plate) was measured. Next, an obtained two-dimensional brightness distribution image was corrected for variation in the emission intensity of the individual LEDs, filtering processing was executed to suppress bright spot and dark spot noise caused by foreign matter and the like, and then an average value and a standard deviation were calculated for the brightness of all of the pixels. Finally, the brightness and the brightness uniformity were calculated, with the "brightness" defined as "average value of brightness" and the "brightness uniformity" defined as "average value of brightness/standard deviation of brightness". The brightness and the brightness uniformity were calculated three times with respect to the same sample, and the brightness and the brightness uniformity were evaluated from the average values thereof.

The results of evaluating the brightness and the brightness uniformity of the 16 samples of the second light-diffusing sheet 43B (samples A to P), described above, are shown on Tables 1 and 2, respectively. Note that in the comparative example not having the coating layer 103, the brightness was 3738 cd/m² and the brightness uniformity was 362. 9.

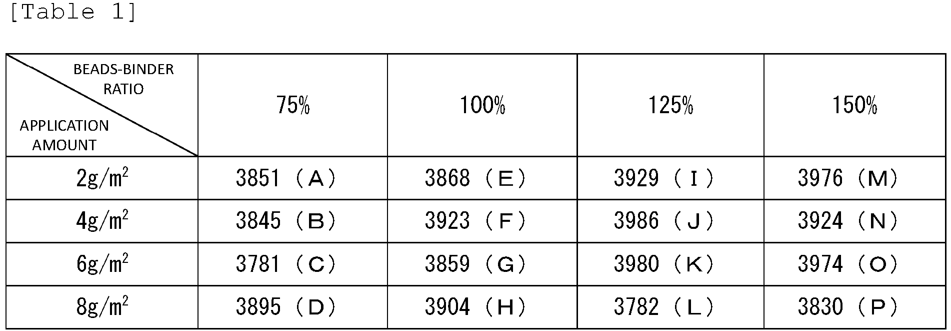

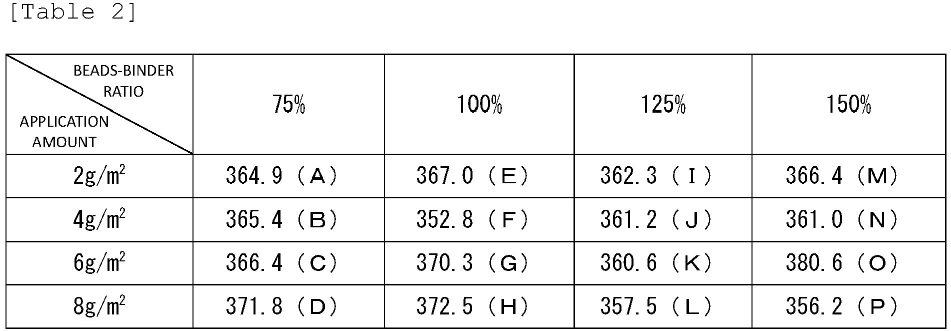

As shown on Tables 1 and 2, by increasing the beads-binder ratio above 75% and reducing the application amount below 8 g/m², it was possible to improve the brightness while keeping the brightness uniformity approximately the same as compared with the comparative example. A particularly favorable brightness enhancement effect was obtained when the beads-binder ratio was set at 100% or more and the application amount was set at 6 g/m² or less (samples E to G, I to K, and M to O). Further, when the beads-binder ratio was between 75% and 125%, the brightness improved as the beads-binder ratio increased (samples A to C, E to G, and I to K), except for the cases where the application amount was 8 g/m². Furthermore, when the beads-binder ratio was between 125% and 150% and the application amount was reduced from 8 g/m² to 6 g/m², both the brightness and the brightness uniformity improved (samples K, L, O, and P).

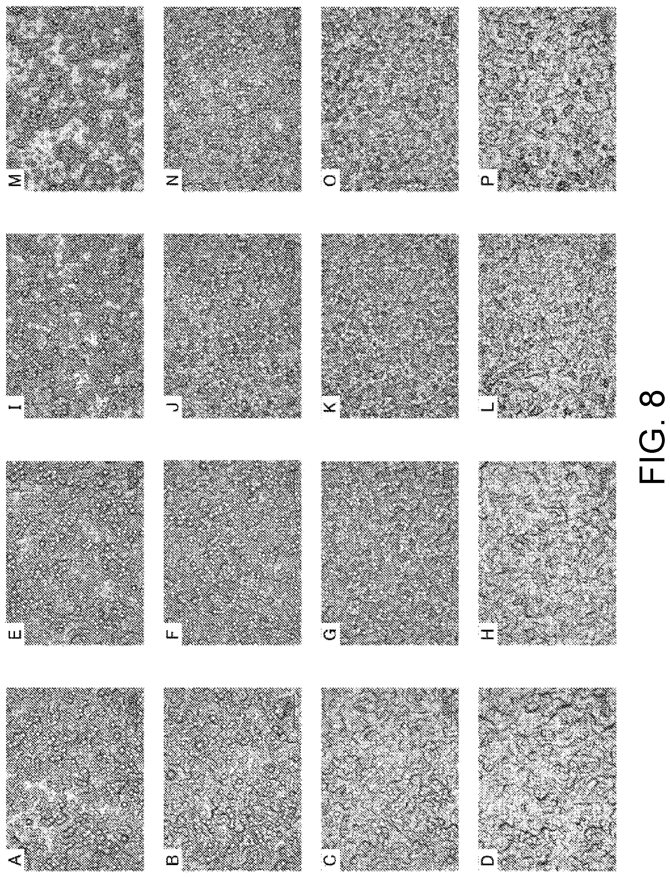

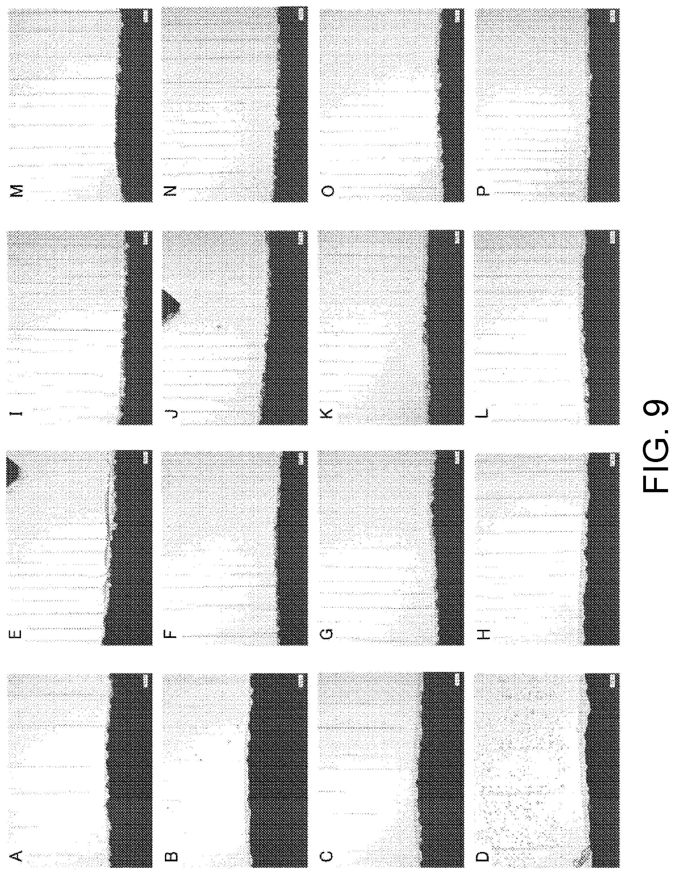

From the results shown on Table 1, with the coating layer 106 obtained by applying the resin 106 containing the large amount of particles 107 thinly, the large number of particles 107 project uniformly over the entire coating layer 103 such that light is emitted in a direction perpendicular to the second surface S2 by the projecting parts of the particles 107, and as a result, it is inferred that with this coating layer 103, the brightness is improved. Surface images of the coated surfaces of the samples A to P, shown in FIG. 8, and cross-sectional images of the periphery of the coating layers of the samples A to P, shown in FIG. 9, also show that the large number of particles 107 project uniformly in the samples F, G, J, K, N, and O, in which the beads-binder ratio was 100% or more and the application amount was 6 g/m² or less.

Results of measuring the arithmetic mean roughness Ra, maximum height Rz, and element average length (the average length of the roughness curve element) RSm of the second surface S2 provided with the coating layer 103 in relation to the 16 samples of the second light-diffusing sheet 43B (the samples A to P) are shown on Tables 3-5, respectively. Ra, Rz, and RSm were measured using a contact-type surface roughness measuring machine SJ-210 (manufactured by Mitutoyo Corp.) in accordance with JIS B 0601-2001. The measurement speed was set to 0.5 mm/s, the measurement distance was set to 4 mm, and the cut-off value λc was set to 0.8 mm. Measurement was performed in three locations, and the average values are shown on Tables 3-5.

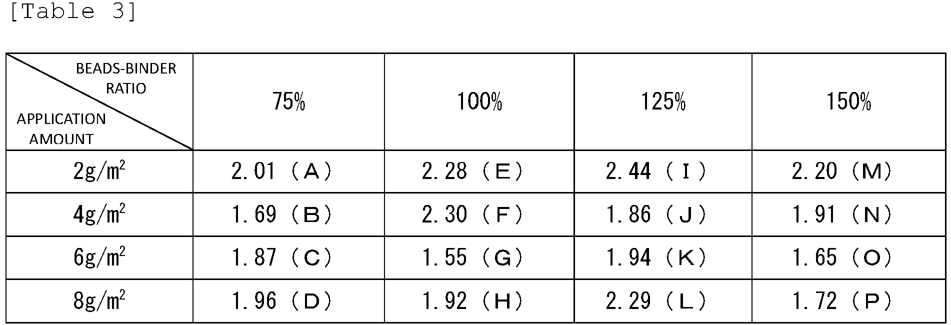

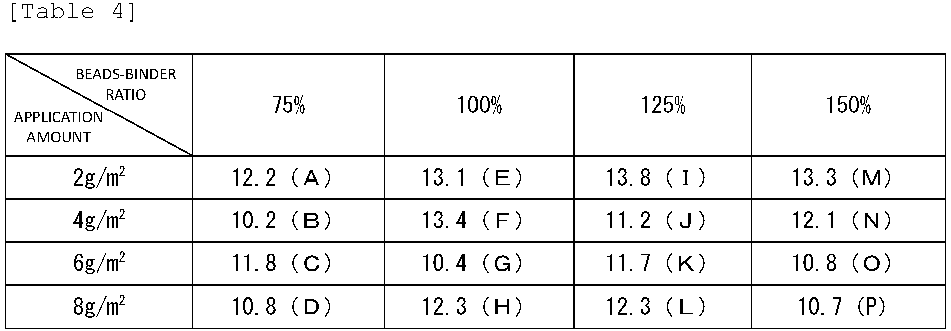

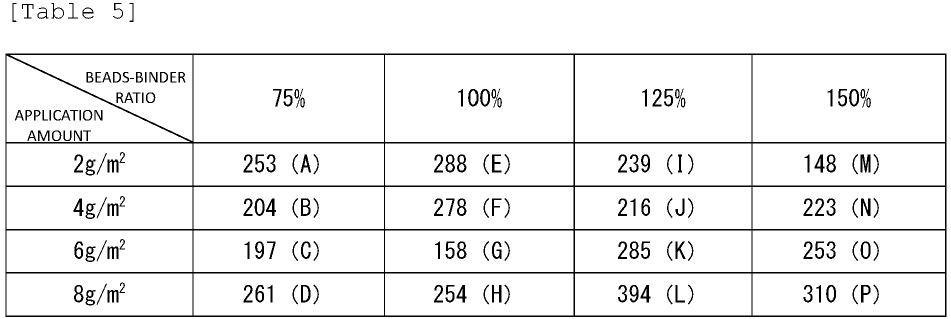

As shown on Tables 3 to 5, it was learned that in order to obtain the brightness enhancement effect described above with the coating layer 103, the arithmetic mean roughness Ra should be set to 1.5 µm or more and 2.5 µm or less, preferably 1.8 µm or more and 2.5 µm or less, the maximum height Rz should be set to 10 µm or more and 14 µm or less, preferably 11 µm or more and 14 µm or less, and the element average length RSm should be set to 140 µm or more and 300 µm or less, preferably 200 µm or more and 300 µm or less.

### (Other embodiments)

An embodiment (including examples: the same applies hereinafter) of the present disclosure was described above, but the present disclosure is not solely limited to the embodiment described above, and various modifications can be made within the scope of the disclosure. In other words, the foregoing description of the embodiment is illustrative in nature and is not intended to limit the present disclosure, its applications, or its uses.

### Reference Signs List

- 1: TFT substrate
- 2: CF substrate
- 3: Liquid crystal layer
- 5: Liquid crystal display panel
- 6: First polarizing plate
- 7: Second polarizing plate
- 40: Backlight unit
- 41: Reflective sheet
- 42: Light source
- 43: Light-diffusing sheet
- 43A: First light-diffusing sheet
- 43B: Second light-diffusing sheet
- 44A: Wavelength selection sheet
- 44B: Color conversion sheet
- 45: First prism sheet
- 46: Second prism sheet
- 47: Upper light-diffusing sheet
- 50: Liquid crystal display device
- 50a: Display screen
- 101, 101A,: 101BBase material layer
- 102, 102A,: 102BLight-diffusing layer
- 103: Coating layer
- 105, 105A,: 105BRecess
- 106: Resin
- 107: Particle

## Claims

1. A light-diffusing sheet having an uneven shape for diffusing light on a first surface,
wherein a coating layer constituted by a resin containing a plurality of particles is provided on a second surface on the opposite side to the first surface,
an arithmetic mean roughness Ra of the second surface provided with the coating layer is 1.5 µm or more and 2.5 µm or less,
a maximum height Rz of the second surface provided with the coating layer is 10 µm or more and 14 µm or less, and
an element average length RSm of the second surface provided with the coating layer is 140 µm or more and 300 µm or less.

2. The light-diffusing sheet according to claim 1,
wherein the arithmetic mean roughness Ra is 1.8 µm or more and 2.5 µm or less,
the maximum height Rz is 11 µm or more and 14 µm or less, and
the element average length RSm is 200 µm or more and 300 µm or less.

3. A light-diffusing sheet having an uneven shape for diffusing light on a first surface,
wherein a coating layer constituted by a resin containing a plurality of particles is provided on a second surface opposite to the first surface,
a mass ratio of the plurality of particles to the resin in the coating layer is 80% or more and 150% or less, and
a mass per unit area of the coating layer is 2 g/m² or more and 7 g/m² or less.

4. The light-diffusing sheet according to claim 3,
wherein the mass ratio is 100% or more and 150% or less, and
the mass per unit area is 2 g/m² or more and 6 g/m² or less.

5. The light-diffusing sheet according to any one of claims 1 to 4,
wherein the plurality of particles have a hollow structure.

6. The light-diffusing sheet according to any one of claims 1 to 4,
wherein an average particle size of the plurality of particles is 0.1 µm or more and 30 µm or less.

7. The light-diffusing sheet according to any one of claims 1 to 4,
wherein the uneven shape is constituted by a plurality of inverted substantially square pyramid-shaped recesses arranged in a two-dimensional matrix pattern.

8. The light-diffusing sheet according to any one of claims 1 to 4,
wherein the second surface, which is an application surface of the coating layer, is a matte surface or a flat surface.

9. A backlight unit built into a liquid crystal display device for guiding light emitted from a plurality of light sources toward a display screen,
the backlight unit comprising the light-diffusing sheet according to any one of claims 1 to 4, which is provided between the display screen and the plurality of light sources,
wherein the light-diffusing sheet is arranged with the first surface facing the plurality of light sources.

10. The backlight unit according to claim 9,
wherein one or a plurality of brightness enhancing sheets are provided between the display screen and the light-diffusing sheet, and
one or a plurality of other light-diffusing sheets having an uneven shape for diffusing light on at least one surface are provided between the light-diffusing sheet and the plurality of light sources.

11. A liquid crystal display device comprising:
the backlight unit according to claim 9; and
a liquid crystal display panel.

12. An information apparatus comprising the liquid crystal display device according to claim 11.
